(19) Europäisches Patentamt
European Patent Office
Office européen des brevets

(11) **EP 2 006 559 A2**

(12) **EUROPÄISCHE PATENTANMELDUNG**

(43) Veröffentlichungstag:
**24.12.2008 Patentblatt 2008/52**

(51) Int Cl.:
*F16C 32/04* (2006.01)     *F16F 15/03* (2006.01)

(21) Anmeldenummer: **08158429.4**

(22) Anmeldetag: **17.06.2008**

(84) Benannte Vertragsstaaten:
**AT BE BG CH CY CZ DE DK EE ES FI FR GB GR
HR HU IE IS IT LI LT LU LV MC MT NL NO PL PT
RO SE SI SK TR**
Benannte Erstreckungsstaaten:
**AL BA MK RS**

(30) Priorität: **19.06.2007   DE 102007028018**

(71) Anmelder: **Nexans SuperConductors GmbH
50351 Huerth (DE)**

(72) Erfinder:
• **May, Hardo
38124 Braunschweig (DE)**
• **Der andere Erfinder hat auf seine Nennung
verzichtet.**

(74) Vertreter: **Feray, Valérie
Feray Lenne Conseil
39/41, avenue Aristide Briand
F-92160 Antony (FR)**

(54) **Dämpfersystem für Magnetlager mit Hochtemperatur-Supraleiter**

(57)     Die vorliegende Erfindung betrifft ein elektrody-namisches Dämpfersystem, das zur Unterdrückung von Schwingungen in Hochtemperatur-Supraleiterlagern geeignet ist und damit ausgerüstete Hochtemperatur-Supraleiterlager.

Das Dämpfer umfasst ein permanent magnetisches Erregersystem (9), das ein Gradientenfeld erzeugt, und eine elektrisch leitfähige Schicht (8) als Dämpferreaktionsteil, wobei die elektrisch leitfähige Schicht (8) mit dem Gradientenfeld wechselwirkt.

Fig. 6a

EP 2 006 559 A2

**Beschreibung**

Die vorliegende Erfindung betrifft ein Dämpfersystem, das für Hochtemperatur-Supraleiterlager geeignet ist und insbesondere mit dem Dämpfersystem ausgestattete Hochtemperatur-Supraleiterlager.

Die Nutzung des Levitationseffektes zwischen einem Magnetfeld (Erregung durch Dauermagnete oder Stromspulen) und einem Hochtemperatursupraleiter (HTSL) zum Aufbau einer berührungsfreien Lagerung (SMB) von linearen beziehungsweise rotierenden Systemen ist seit einigen Jahren bekannt.

Prinzipiell enthält ein Hochtemperatur-Supraleiterlager (HTSL Lager) eine Permanentmagnetanordnung als Erregersystem sowie einen Hochtemperatursupraleiter, wobei der Hochtemperatursupraleiter von dem magnetischen Fluß der Permanentmagnetanordnung durchdrungen wird. Wird nun der Hochtemperatursupraleiter auf eine Temperatur unterhalb seiner Sprungtemperatur Tc gekühlt, wird der ihn durchdringende magnetische Fluss eingefroren. Im Falle einer Lageveränderung werden Kräfte erzeugt, die der Lageveränderung entgegenwirken. Diese Kräfte können abstoßend oder anziehend sein, sind jedoch auf jeden Fall derart gerichtet, dass sie gegen eine Lageveränderung aus der Einkühlposition heraus entgegenwirken.

HTSL Lager können zur berührungsfreien Lagerung von rotierenden Systemen eingesetzt werden. Diese Lager bestehen prinzipiell aus einem feststehenden Teil, dem Stator, und einem rotierenden Teil, dem Rotor. Üblicherweise enthält der Stator den Hochtemperatursupraleiter und der Rotor ist mit einer Permanentmagnetanordnung versehen, die als Erregersystem wirkt. Der Hochtemperatursupraleiter befindet sich zur Kühlung in einem Dewar. Beispielhaft wird hierfür auf die Europäische Patentanmeldung EP 1 767 798 A1 sowie auf WO 02/06688 A1 verwiesen, auf die hier voll inhaltlich Bezug genommen wird, insbesondere für Aufbau und Funktionsweise von HTSL Lagern.

HTSL Lager zeichnen sich durch einen selbststabilen, berührungsfreien Betrieb aus und bieten dadurch eine große Laufruhe und Wartungsarmut. Weiterhin zeichnen sie sich durch eine große Unempfindlichkeit gegenüber größeren Störfeldern aus und ermöglichen aufgrund ihres Funktionsprinzips einen sicheren Betrieb über Stunden auch nach Ausfall aller äußeren Energieversorger.

Wie jedes Lager kann ein supraleitendes Magnetlager neben der maximalen Drehzahl durch seine Steifigkeit und maximale Tragkraft gekennzeichnet werden. Durch die Steifigkeit c und der Masse m des zu tragenden Körpers (hier des Rotors) ist die Eigenfrequenz gegeben: $f_o = \frac{1}{2\pi}\sqrt{\frac{c}{m}}$ , mit welcher die Masse für den ungedämpften Zustand im Lager bis zu sehr großen (theoretisch unendlichen) Ausschlägen schwingt, wenn es nur durch eine auch sehr kleine, innere oder äußere Kraft mit dieser Frequenz eine gewisse Zeit angeregt wird. Hierbei kann es zu Auslenkungen des Rotors aus seiner Betriebsposition kommen. Dies ist insbesondere bei HTSL Lagern ein Problem, da der Abstand zwischen dem Erregersystem und dem Hochtemperatursupraleiter möglichst klein ausgebildet sein soll, um möglichst hohe Kräfte erzielen zu können. Folglich kann bereits eine geringfügige Auslenkung zu einem Kontakt der Bauteile führen, die den Betrieb empfindlich stören würde. Derartige Schwingungen treten insbesondere beim Hoch- beziehungsweise Runterfahren des HTSL Lagers auf.

Es ist bekannt, in herkömmlichen Lagern zwischen dem Lager und dem Statorgehäuse angeordnet, Dämpfer, zum Beispiel Quetschfilmdämpfer, in das Lagersystem zu integrieren. Allerdings kann diese bewährte Maßnahme zur Schwingungsunterdrückung nicht im berührungslosen supraleitenden Magnetlagern zum Einsatz kommen, da Schwingungsanalysen mit Magnetlagerdaten zeigen, dass deren Steifigkeit zu gering und der Statorteil des Magnetlagers eine zu große Masse aufweist.

Hier setzt nun die vorliegende Erfindung an.

Es war Aufgabe der vorliegenden Erfindung ein Dämpfersystem zur Verfügung zu stellen, mit dem Schwingungen in einem HTSL Lager unterdrückt oder zumindest möglichst stark reduziert werden können.

Erfindungsgemäß wird diese Aufgabe durch einen elektrodynamisch wirkenden Dämpfer gelöst, der ein permanentmagnetisches Erregersystem und eine elektrisch leitfähige Schicht aufweist, wobei das Erregersystem ein Gradientenfeld erzeugt, das mit der elektrisch leitfähigen Schicht wechselwirkt.

Das Erregersystem kann eine Permanentmagnet- oder Elektromagnetanordnung sein. Das Erregersystem weist vorzugsweise einen großen Feldgradienten in Dämpfungsrichtung auf.

Die elektrisch leitfähige Schicht besteht vorzugsweise aus einem Material mit hoher elektrischer Leitfähigkeit, wie zum Beispiel Kupfer oder Aluminium.

Die Form der elektrisch leitfähigen Schicht richtet sich nach den geometrischen Vorgaben der Anordnung, wie dem Lager, in das der Dämpfer eingebaut wird. Sie kann planar oder gebogen sein, sie kann als Zylinder, Kreis, Scheibe, Platte, etc. ausgestaltet sein.

Zur Schwingungsdämpfung in einem Lager wird entweder das Erregersystem oder die elektrisch leitfähige Schicht mit dem beweglichen Teil des Lagers verbunden.

Das erfindungsgemäße elektrodynamisch wirkende Dämpfersystem kann prinzipiell für Anwendungen, die eine entsprechende Schwingungsdämpfung erfordern, eingesetzt werden, wie für herkömmliche Lager einschließlich Magnetlager.

Insbesondere eignet sich der elektrodynamische Dämpfer der vorliegenden Erfindung auch zur Schwingungsdämpfung in Hochtemperatur-Supraleiterlagern. Diese können zum Beispiel linear, planar oder zylindrisch ausgeführt sein.

Die vorliegende Erfindung wird nunmehr unter Verweis auf die anliegenden Figuren und unter Bezugnahme auf konkrete Anwendungsbeispiele in HTSL-Lagern im Einzelnen erläutert werden.

Es zeigen:

| | |
|---|---|
| **Figur 1** | eine Prinzipienskizze eines linearen HTSL Lagers; |
| **Figuren 2a und b** | Beispiele einer Erregersystemanordnung für ein HTSL Lager; |
| **Figuren 3a bis 3c** | Prinzipienskizzen von Ausführungsformen von HTSL-Lagern; |
| **Figur 4** | schematisch den Aufbau einer planaren Ausführungsform; |
| **Figur 5** | schematisch den Aufbau einer zylindrischen Ausführungsform; |
| **Figur 6a** | eine Prinzipienskizze des Aufbaus eines kartesischen elektrodynamischen Dämpfers gemäß der vorliegenden Erfindung; |
| **Figur 6b** | die Feldverteilung in dem Dämpfer gemäß Figur 6a; |
| **Figur 7a** | eine Prinzipienskizze des Aufbaus eines zylindrischen elektrodynamischen Dämpfers gemäß der vorliegenden Erfindung; |
| **Figur 7b** | die Feldverteilung in dem Dämpfer gemäß Figur 7a; |
| **Figur 8** | ist eine Prinzipienskizze einer weiteren Ausführungsform eines erfindungsgemäßen elektrodynamischen Dämpfersystems; |
| **Figur 9a** | ein in das Magnetlager mechanisch integriertes Dämpfersystem; |
| **Figur 9b** | einen vergrößerten Ausschnitt der Ausführungsform gemäß Figur 9a; |
| **Figur 10** | eine weitere Ausführungsform für ein mechanisch und wirktechnisch integriertes Dämpfersystem; |
| **Figur 11** | ein erfindungsgemäßes Dämpfersystem mit verstärkter Dämpferwirkung; |
| **Figur 12** | eine Ausgestaltung der Ausführungsform gemäß Figur 11; |
| **Figur 13** | eine Ausgestaltung der Ausführungsform gemäß Figur 12; |
| **Figur 14** | eine Prinzipienskizze einer Quetschfeldanordnung mit elektrisch leitfähige Schicht mit streifenförmigen Verstärkungen gemäß Figur 11; |
| **Figur 15** | eine Prinzipienskizze eines konzentrisch-zylindrischen Magnetlagers mit Quetschfelddämpfer und streifenförmig verstärkter elektrisch leitfähiger Schicht gemäß Figur 11; |
| **Figur 16** | eine Prinzipienskizze eines planar-zylindrischen Magnetlagers mit Quetschfelddämpfer und streifenförmig verstärkter elektrisch leitfähiger Schicht gemäß Figur 11 und |
| **Figur 17** | eine Prinzipienskizze einer weiteren Ausführungsform eines linearen Magnetlagers mit Quetschfelddämpfer und Dämpferwicklung gemäß Figuren 12 und 13. |

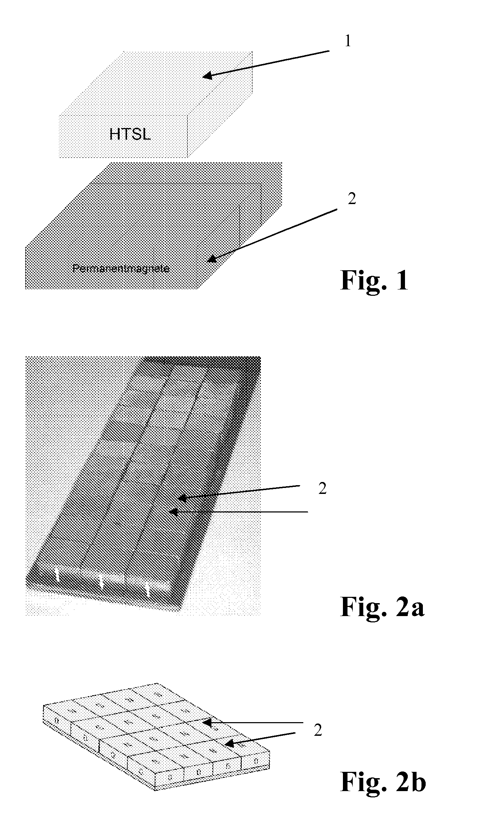

In **Figur 1** bezeichnet 1 den Hochtemperatursupraleiter und 2 die Permanentmagnetanordnung. Hier besteht die Permanentmagnetanordnung aus einer Vielzahl von einzelnen Permanentmagneten, die nebeneinander und in Reihe angeordnet sind.

Die Permanentmagnetanordnung als Erregersystem beeinflusst über den räumlichen Gradienten des Erregerfeldes die Anzahl der Bewegungs-Freiheitsgrade und die Steifigkeit des Lagers.

Das in Figur 1 dargestellte lineare HTSL-Lager erlaubt bei einem Erregersystem gemäß **Figur 2a**, das aus in Längsrichtung gleich magnetisierten Magneten besteht, in diese Richtung eine kräftefreie Bewegung. Sind jedoch die nebeneinander liegenden Magnete, wie in **Figur 2b** gezeigt, alternierend magnetisiert, so ist die Bewegungsrichtung des schwebenden Körpers in allen sechs Freiheitsgraden eingeschränkt. Bei statischen äußeren Kräften, beziehungsweise Momenten, richtet sich die Auslenkung nach den Federsteifigkeiten. In den Figuren 2a und 2b ist die Magnetisierungsrichtung der Permanentmagnete durch Pfeile angeordnet.

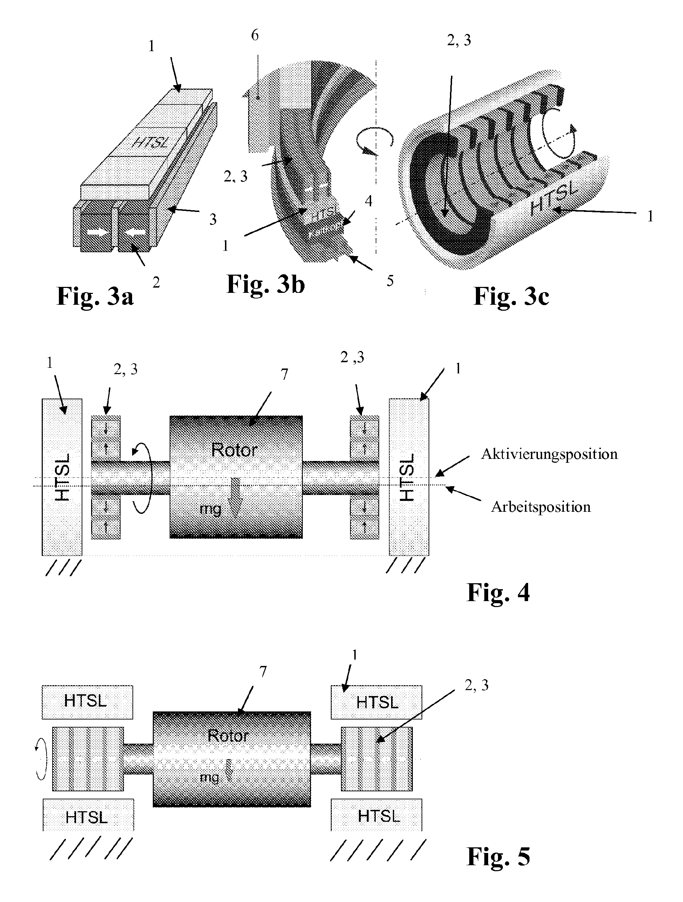

**Figuren 3a bis 3c** zeigen die Umwandlung einer linearen supraleitenden Lageranordnung (Figur 3a) in eine planare (Figur 3b) und in eine zylindrische Ausführungsform (Figur 3c) durch Verbiegung der linearen Lageranordnung um die entsprechenden Achsen.

In dem Erregersystem gemäß Figur 3a bis 3c sind die Permanentmagnete 2 zwischen ferromagnetischen Flussleiterstücken 3, zum Beispiel Eisenpolen, angeordnet. Die Magnetisierung der Permanentmagnete ist durch Pfeile angedeutet.

Die planare Ausführungsform gemäß Figur 3b entsteht durch Biegung der linearen Lageranordnung um die Achse vertikal zur Blattebene.

In Figur 3b sind zusätzlich zu dem Erregersystem 2, 3 und dem Hochtemperatursupraleiter 1 noch weitere Elemente eines Hochtemperatur-Supraleiterlagers angedeutet, wie der Kaltkopf 4 zur Abführung der Wärme aus dem Supraleitermaterial und eine thermisch isolierende Stützvorrichtung 5. Derartige planare Lager können insbesondere für rotierende Energiespeicher, beispielsweise einen Kohlefaserzylinder 6, eingesetzt werden.

Figur 3c zeigt eine zylindrische Ausführungsform, die durch Biegung der linearen Anordnung gemäß Figur 3a um eine Achse parallel zur Blattebene erhalten wird. Derartige zylindrischen Lager werden insbesondere für rotierende Wellen eingesetzt.

**Figur 4** zeigt schematisch den Aufbau eines planaren Lagers mit dem Rotor 7. Des Weitern ist in Figur 4 schematisch die Aktivierungsposition und die Arbeitsposition dargestellt. Die Aktivierungsposition entspricht hierbei der Position des Rotors zum HTSL während des Abkühlens des Hochtemperatursupraleiters und die Arbeitsposition der Auslenkung im Betrieb, die zur Krafterzeugung erforderlich ist. Ebenfalls angedeutet ist durch einen Pfeil die externe Belastung aufgrund des Rotorgewichtes, die nach der Abkühlphase vom Magnetlager kompensiert werden muss.

**Figur 5** zeigt schematisch den Aufbau eines zylindrischen Lagers für horizontal ausgerichtete Rotoren.

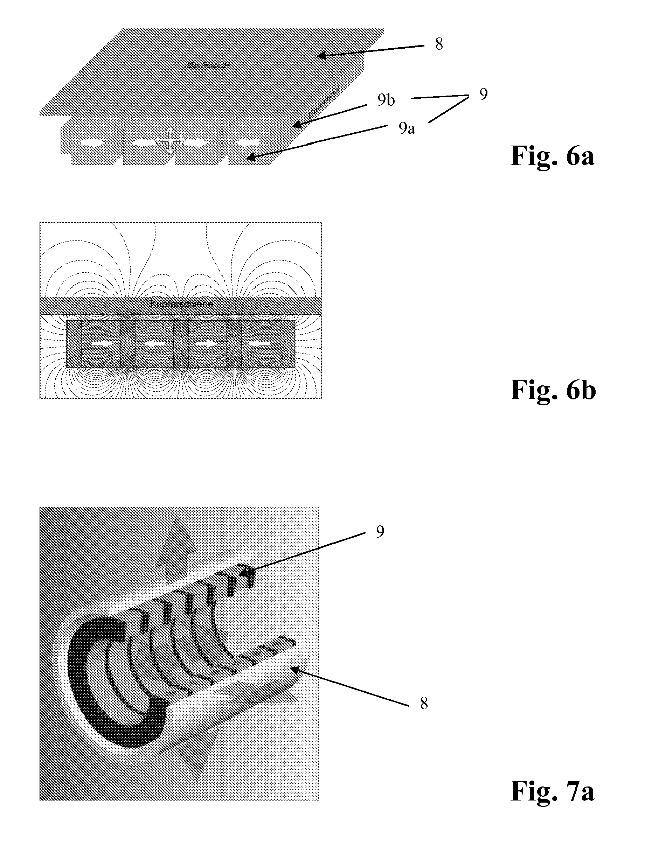

Ein lineares elektrodynamisches Dämpfersystem gemäß der vorliegenden Erfindung ist in **Figur 6a** gezeigt und umfasst eine elektrisch leitfähige Schicht 8 sowie ein permanentmagnetisches Erregersystem 9.

Die elektrisch leitfähige Schicht 8 kann prinzipiell aus einem beliebigen Material mit guter elektrischer Leitfähigkeit gebildet sein. Beispiele hierfür sind Metalle wie Kupfer oder Aluminium.

Als besonders geeignet hat sich Kupfer gezeigt. Jedoch können ohne Weiteres andere Materialien mit ähnlichen Eigenschaften eingesetzt werden.

Das Erregersystem 9 ist entsprechend dem Erregersystem des supraleitenden Lagers aus einer Anzahl von Permanentmagneten 9a gebildet, die zwischen ferromagnetischen Flussleitstücken 9b, zum Beispiel Eisenpolen, angeordnet sein können. Die Magnetisierung der Permanentmagnete 9a ist wieder durch Pfeile angedeutet. Die bedämpften Bewegungsrichtungen sind durch das Pfeilkreuz gekennzeichnet.

Das permanentmagnetische Erregersystem erzeugt ein Gradientenfeld mit dem die elektrisch leitfähige Schicht 8 in Wechselwirkung gebracht wird und wobei bei Verschiebung des Erregersystems zum Beispiel durch Rotorvibrationen eine dämpfende Kraft aufgebaut wird.

Der erfindungsgemäße elektrodynamische Dämpfer ermöglicht damit eine berührungsfreie Dämpfung. Zudem ist anders als in herkömmlichen Dämpfern kein Fluid erforderlich.

In **Figur 6b** ist die Feldverteilung des elektrodynamischen Dämpfers gemäß Figur 6a gezeigt. Das Erregersystem sollte vorzugsweise, wie auch in Figur 6b gezeigt, einen großen Feldgradienten in Dämpfungsrichtung aufweisen.

In **Figur 7a** ist der Aufbau eines zylindrischen elektrodynamischen Dämpfers gezeigt. In dieser Ausführungsform hat die elektrisch leitfähige Schicht 8 eine Zylinderform. Die Feldverteilung im Längsschnitt des in Figur 7a dargestellten Dämpfers zeigt **Figur 7b**.

Üblicherweise wird das Erregersystem 9 für den Dämpfer mit dem Rotor 7 beziehungsweise der Rotorwelle des Lagers verbunden. Wenn sich nun das mit dem Rotor verbundene Erregersystem 9 aufgrund von Kräften, wie sie in Figur 7a durch Pfeile angedeutet sind, innerhalb des aus der elektrisch leitfähigen Schicht 8 gebildeten Zylinders axial und/oder radial bewegt, werden in dem Zylinder Wirbelströme erzeugt (Faradays Gesetz, Maxwell'sche Gleichung), die Kräfte erzeugen, die proportional zur Geschwindigkeit sind. Diese Kräfte werden in der Schwingungstheorie Dämpfungskräfte genannt und können je nach Größe die Schwingungsamplituden signifikant begrenzen.

Für die Anordnung des erfindungsgemäßen Dämpfersystems in einem HTSL Lager sind zahlreiche Möglichkeiten denkbar.
Nachstehend werden Beispiele für grundlegende Anordnungen näher erläutert.

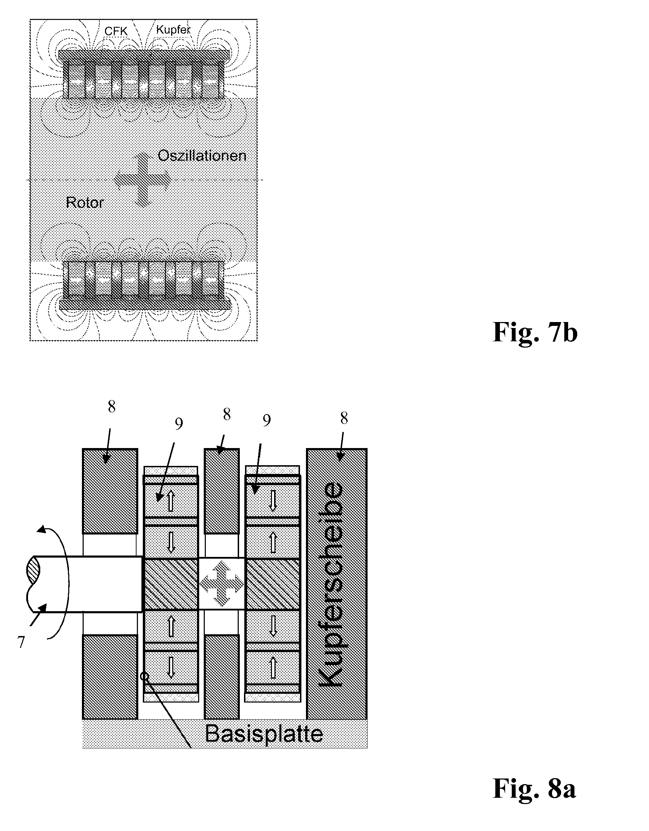

Wie bereits ausgeführt ist üblicherweise das Erregersystem 9 des Dämpfers mit dem beweglichen Teil des Lagers, zum Beispiel dem Rotor beziehungsweise der Rotorwelle verbunden.
Ein Beispiel hierfür zeigt Figur 7b. Gemäß Figur 7b ist das Erregersystem für den Dämpfer 9 mit dem Rotor 7 verbunden und umgibt diesen kreisförmig.

Die elektrisch leitfähige Schicht 8 kann zum Beispiel an der Dewarwand in der Warmbohrung des Dewars, der den Hochtemperatursupraleiter umgibt, angebracht sein.

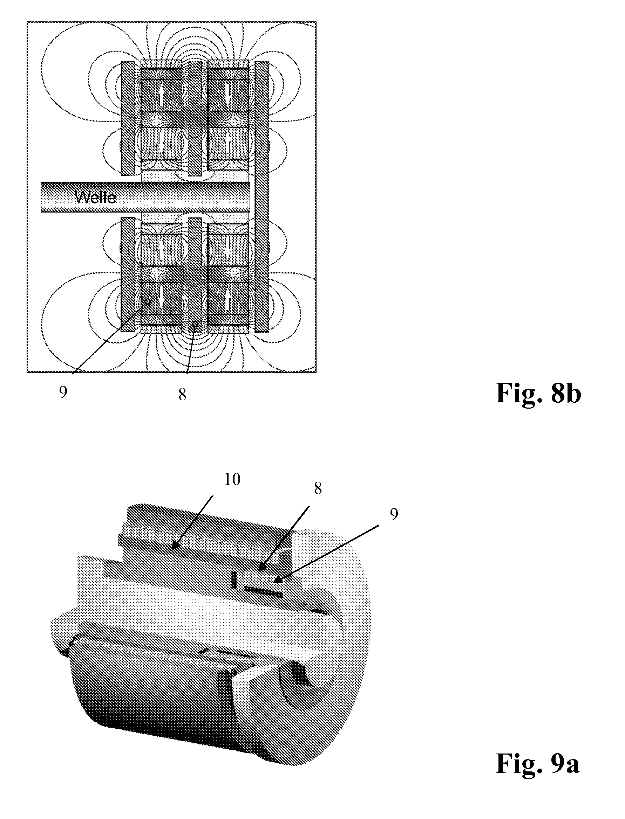

Wie hier gezeigt, kann das erfindungsgemäße Dämpfersystem auch aus einer Abfolge von hintereinander angeordneten Erregersystemen 9 und elektrisch leitfähige Schicht 8 aufgebaut sein.
So zeigt Figur 8 ein planar-zylindrisches elektrodynamisches Dämpfersystem, das auf einer Rotorwelle 7 angeordnet ist. Das System besteht hier aus mehreren abwechselnd hintereinander angeordneten kreisförmigen Scheiben aus elektrisch leitfähigem Material zwischen denen jeweils ein Erregersystem 9 für den Dämpfer angeordnet ist. Die Feldverteilung des elektrodynamischen Dämpfersystems nach **Figur 8a** in Arbeitsposition des Lagers ist in **Figur 8b** gezeigt.

Das Dämpfersystem, wie es in Figur 8 dargestellt ist, kann auf der Rotorwelle dem Lager nachgeordnet angebracht sein.

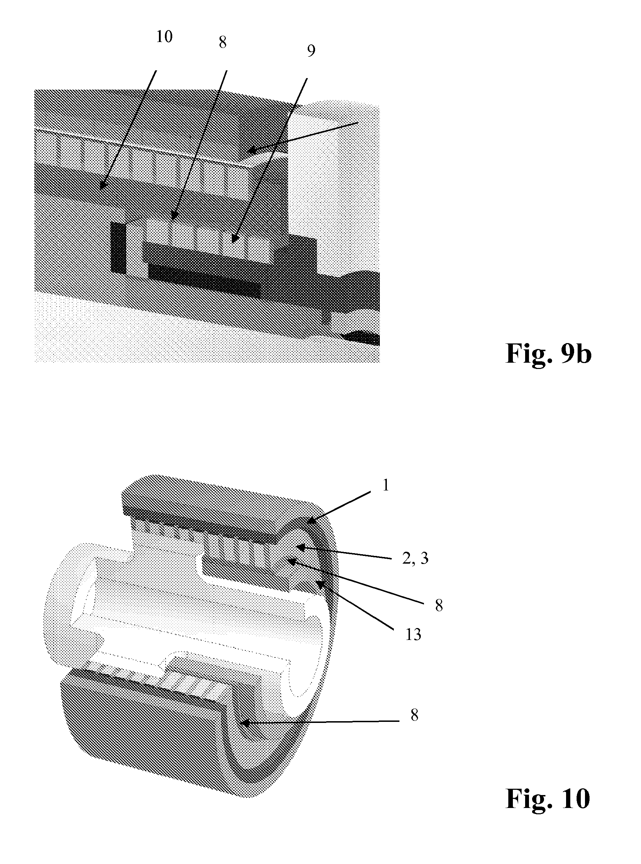

Gemäß einer weitern Ausführungsform kann der elektrodynamische Dämpfer mechanisch in das Magnetlager selbst integriert sein, wie in **Figur 9a** und als vergrößerter Ausschnitt in **Figur 9b** gezeigt.
Hierbei befinden sich die elektrisch leitfähige Platte 8 und das Erregersystem 9 innerhalb des Rotors 7, wobei Bezugszeichen 10 die Außenwand des Rotors 7 ist. Die elektrisch leitfähige Schicht 8 ist hier zwischen der Rotorwand 10 und dem Erregersystem 9 des Dämpfers angeordnet. Der in Figur 9b dargestellte Teilausschnitt zeigt, dass der Dämpfer als eigenständige Einheit integriert ist. Hierdurch kann die Gesamtlänge des Lagerbereichs bestehend aus Magnetlager und Dämpfer drastisch verkürzt werden. Dies hat nicht nur den Vorteil des Platzsparens, sondern zusätzlich erhöht sich noch die Eigenfrequenz der Rotoreinheit.

Eine vorteilhafte Ausgestaltung der Ausführungsform gemäß Figur 9 ist in **Figur 10** gezeigt. Hier wird das Erregersystem 2, 3 des Magnetlagers gleichzeitig als Erregersystem für den elektrodynamischen Dämpfer genutzt. In dieser Ausführungsform ist die elektrisch leitfähige Schicht 8 feststehend zwischen Erregersystem 2, 3 und der Außenoberfläche einer Tragstruktur 13 angeordnet. Neben einer Kosteneinsparung ist mit dieser Ausführungsform eine Volumen- und Massenreduktion verbunden, welche vorteilhaft die Eigenresonanz des Systems erhöht.

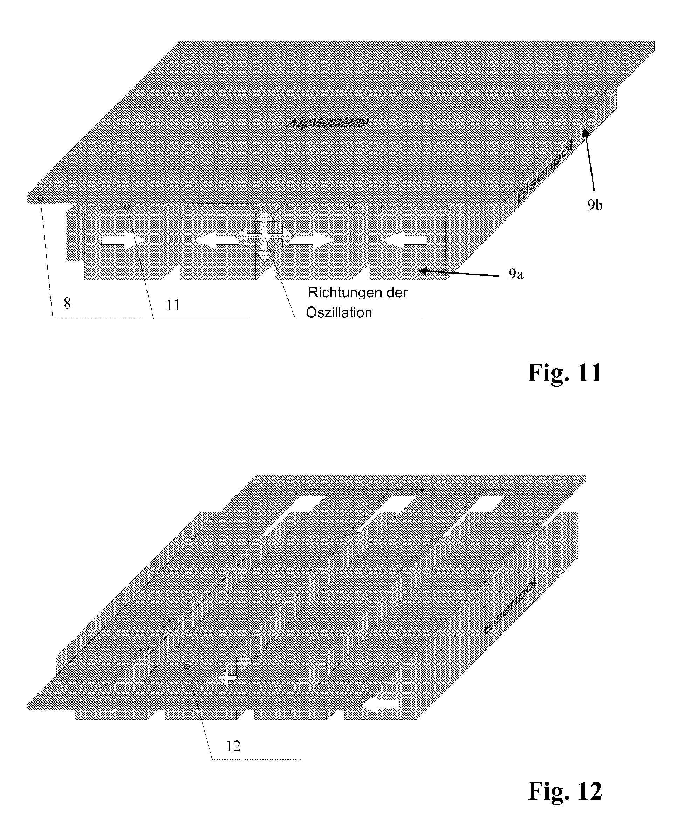

Allgemein hängen die Dämpfungseigenschaften des erfindungsgemäßen elektrodynamischen Dämpfers stark vom Erregersystem (Amplitude und Gradient des Feldes) und von der Güte (Leitfähigkeit und Dicke) der elektrisch leitfähigen Schicht 8 als Dämpferreaktionsteil ab. Wie die in Figur 6b gezeigte Feldverteilung zwischen Erregersystem 9 und elektrisch leitfähiger Schicht 8 erkennen lässt, ist die Felddichte zwischen den Eisenpolen 9b erhöht. Eine Verstärkung der Dämpfungswirkung kann daher erzielt werden, wenn die Permanentmagnete 9a zwischen den Eisenpolen 9b zurückgesetzt angeordnet werden und die elektrisch leitfähige Schicht 8 in diesem Bereich durch Vorsehen einer Verstärkung, zum Beispiel von Streifen verstärkt wird. Diese Verstärkung kann in die Polzwischenbereiche hineinragen. Eine derartige Anordnung ist in **Figur 11** dargestellt.

Eine Ausgestaltung der Ausführungsform gemäß Figur 11 zeigt **Figur 12**. Hier ist die elektrisch leitfähige Schicht 8 aus einzelnen Streifen ausgebildet, die zwischen den Polen über den zurückgesetzten Permanentmagneten angeordnet ist. Eine Grundplatte wie in Figur 11, auf der die Streifen aufgebracht sind, ist nicht erforderlich. Damit sich die aufgrund der Schwingungen induzierten Wirbelströme besser schließen können, können die Streifen zu einer Wicklung verschaltet werden. Dies kann durch einen Kurzschluss durch Stege an den vorderen und hinteren Enden der Streifen erfolgen, wobei eine so genannte Dämpferwicklung gebildet wird.

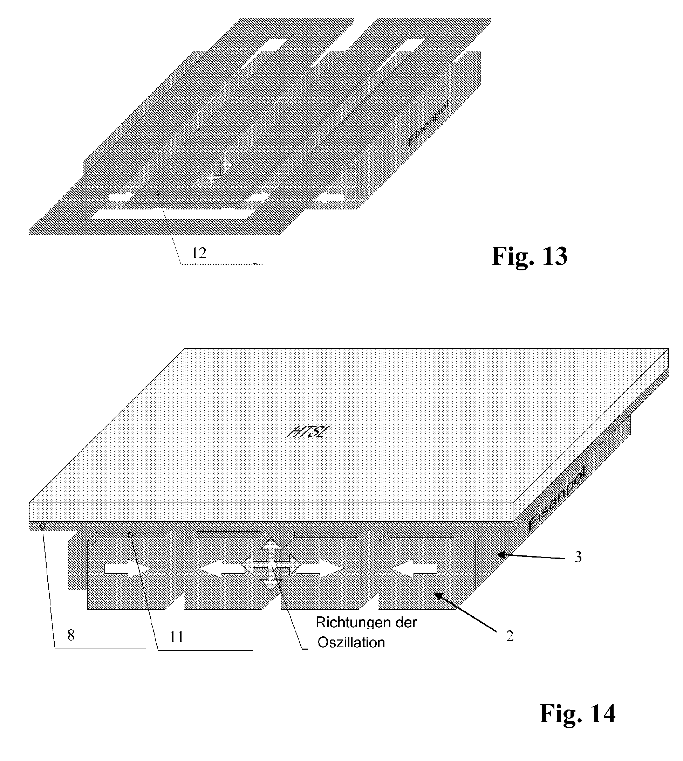

Eine Ausgestaltung der Dämpferwicklung gemäß Figur 12 zeigt **Figur 13**. Hier ist die Dämpferwicklung dadurch verwirklicht, dass die Streifen alternierend hinten und vorne verbunden sind und zusätzlich noch die beiden Wicklungsenden durch einen Steg kurzgeschlossen werden.

Mit den Stegen allein ohne Verbindung wird ebenfalls eine ausreichende Dämpferwirkung erzielt.

In den bisher gezeigten Ausführungsformen ist die Dämpferanordnung lediglich mechanisch mit den zu dämpfenden Magnetlagern verbunden. Ein kompakterer Aufbau kann erhalten werden, wenn die elektrodynamische Dämpferanordnung unmittelbar in dem Wirkbereich des Supraleitermagnetlagers angeordnet wird.

Ein Beispiel hierfür ist in **Figur 14** gezeigt. Gemäß dieser Ausführungsform befindet sich zwischen Erregersystem 2, 3 des Lagers und dem Hochtemperatursupraleiter 1 die elektrischleitfähige Schicht 8. In der Praxis bedeutet dies, dass die elektrisch leitfähige Schicht im Hochtemperatursupraleiter in dem Spalt zwischen Hochtemperatursupraleiter 1 und Erregersystem 2, 3 angeordnet ist. In dieser Ausführungsform ist der Dämpfer integraler Bestandteil des Magnetlagers.

Bei der Auslegung solcher Dämpfer ist darauf zu achten, dass der Abstand zwischen dem Erregersystem 2, 3 und dem Supraleiter 1 sich allenfalls nur geringfügig vergrößert, da darunter sonst die Lagersteifigkeiten leiden würden.

Auf der anderen Seite wird die Dämpfungseigenschaft durch eine Verstärkung der elektrisch leitfähigen Schicht 8 intensiviert. Für die Optimierung dieser widersprechenden Anforderungen an die Dicke der elektrisch leitfähigen Schicht 8 ist auch zu beachten, dass der Supraleiter 1 nach dem Abkühlen (Kraftaktivierung) das ihn durchdringende Magnetfeld festhält und praktisch keine Feldveränderungen zulässt. Die Wirkung des Dämpfers beruht aber gerade auf solchen Feldveränderungen. Bei der Auslegung ist daher ein Bereich zu schaffen, in dem sich das Magnetfeld quetschen kann. Daher werden in den Wirkbereich eines supraleitenden Magnetlagers integrierte Dämpfer auch Quetschfelddämpfer genannt.

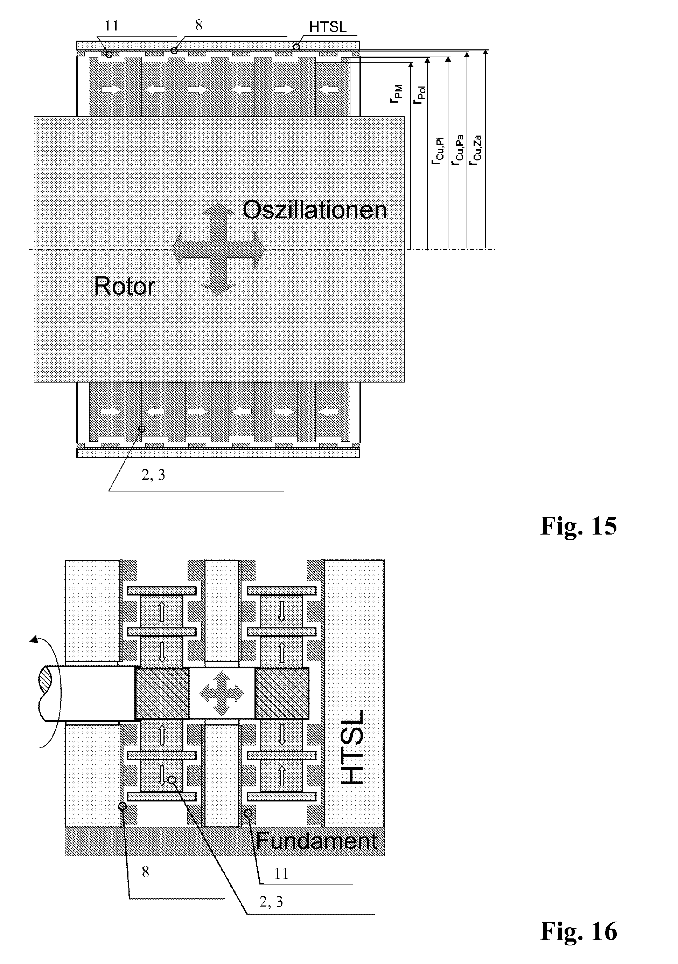

Solche Quetschfelddämpferanordnungen lassen sich auch in konzentrisch-zylindrische und planar-zylindrische Magnetlageranordnungen integrieren, wie sie zum Beispiel in den Figuren 15 und 16 gezeigt sind. Hierbei ist die elektrisch leitfähige Schicht 8 jeweils in dem Spalt, beziehungsweise den Spalten, zwischen Hochtemperatursupraleiter 1 und Erregersystem 2, 3 angeordnet. In der Praxis kann hierfür die elektrisch leitfähige Schicht 8 auf der Außenwand des den HTSL umgebenden Dewars angebracht werden.

Auch für Quetschfeldanordnungen können die Ausführungsformen der elektrisch leitfähigen Schicht 8 gemäß Figuren 11, 12 und 13 eingesetzt werden, wobei die elektrisch leitfähige Schicht 8 streifenförmige Verstärkungen aufweist oder eine aus Streifen gebildete Dämpferwicklung ist. Beispiele für derartige Ausführungsformen sind in **Figuren 14 bis 17** gezeigt.

So zeigt **Figur 14** ein lineares Magnetlager mit einer streifenförmig verstärkten elektrisch leitfähigen Schicht 8, wie sie auch in Figur 11 dargestellt ist. Die Höhe und Breite der streifenförmigen Verstärkungen werden hierbei vorzugsweise so ausgelegt, dass es nach der Aktivierung des supraleitenden Lagers und der zu erwartenden maximalen Auslenkung aus dieser Position, zum Beispiel durch dynamische Belastungen, zu keiner Berührung zwischen den streifenförmigen Verstärkungen 11 und dem Erregersystem 2, 3 kommt.
Durch Zurücksetzen der Permanentmagnete 2 kann eine vergrößerte vertikale Oszillation zugelassen werden.

**Figur 15** zeigt ein konzentrisch-zylindrisches Magnetlager mit Quetschfelddämpfer und einer mit streifenförmigen Verstärkungen ausgestatteten elektrisch leitfähigen Platte 8 gemäß Figur 11. Bei der Dimensionierung der Verstärkungen 11, die in diesem Fall ringförmige Streifen auf der elektrisch leitfähigen Platte 8 bilden, ist für die Montierbarkeit des Gesamtsystems zu beachten, dass der Außenradius des Erregersystems $r_{pol}$ kleiner (zum Beispiel ca. 0,1 mm) als der Innenradius der ringförmigen Verstärkungen $r_{Cu-i}$ gewählt werden muss. Die maximale Höhe der ringförmigen Verstärkungen ($r_{Cu,a}-r_{Cu,i}$) ist durch die maximale radiale Auslenkung des Lagers bestimmt, die ($r_{pol}-r_{pM}$) beträgt. Zur Vergrößerung der zulässigen vertikalen Oszillation können die Permanentmagnete zwischen den Polen etwas zurückgesetzt angeordnet werden, beispielsweise um etwa 1 bis 2 mm.

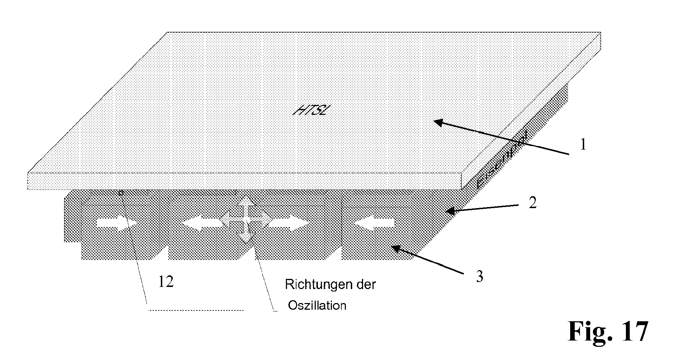

**Figur 16** zeigt ein planar-zylindrisches Magnetlager mit integriertem Quetschfelddämpfer und streifenförmig verstärkter elektrisch leitfähiger Schicht 8.
Diese Ausführungsform unterliegt nicht den Beschränkungen für die Höhe der Verstärkungsstreifen 11 wie in dem konzentrisch zylindrischen Magnetlager gemäß Figur 16. Da in der Ausführungsform gemäß Figur 17 die einzelnen Baugruppen nacheinander auf die Rotorwelle geschoben werden, können die streifenförmigen Verstärkungen 11 auch in die durch die zurückgezogenen Permanentmagnete gebildeten Vertiefungen in das Erregersystem 2, 3 hineinragen. Die Breite der streifenförmigen Verstärkungen richtet sich bei dieser Magnetlagerbauform nach der maximalen radialen Auslenkung des Erregersystems 2, 3 während des Betriebs.

Die Grundplatte, auf der die streifenförmigen Verstärkungen 11 aufgebracht sind, sollte möglichst dünn gewählt werden, damit der Abstand zwischen Hochtemperatursupraleiter 1 und Erregersystem 2, 3 gering bleibt und die Trageigenschaften des Magnetlagers möglichst nicht beeinträchtigt werden.
Dies gilt auch für die vorstehend dargestellten Ausführungsformen gemäß den Figuren 14 und 15.

Anstelle der streifenförmig verstärkten elektrisch leitfähigen Schicht 8, wie sie in den Ausführungsformen gemäß den Figuren 14, 15 und 16 eingesetzt worden ist, kann eine Dämpferwicklung (mit oder ohne Stege) verwendet werden, wie sie in den Figuren 12 und 13 gezeigt ist. In diesem Fall entfällt die Grundplatte, auf der die streifenförmigen Verstärkungen 11 angebracht sind, sodass nur eine in die durch die zurückgezogenen Permanentmagnete 2 gebildeten Vertiefungen hineinragende Wicklung vorliegt. Hiermit lässt sich eine optimale Symbiose aus den Forderungen bezüglich der Lagersteifigkeiten und Dämpfungsgüte erzielen.

Ein Beispiel für eine derartige Ausführungsform ist Figur 17 exemplarisch für ein lineares Magnetlager gezeigt.

**Bezugszeichenliste**

1　　Hochtemperatursupraleiter
2　　Permanentmagnet
3　　ferromagnetisches Flussleitstück, zum Beispiel Eisenpol
4　　Kaltkopf

5      thermisch isolierende Stützvorrichtung
6      Energiespeicher, zum Beispiel Kohlefaserzylinder
7      Rotor
8      elektrisch leitfähige Schicht
9      Erregersystem für Dämpfer
9a     Permanentmagnet
9b     Eisenpol

10     Rotorwand
11     Verstärkung der Schicht 8
12     Dämpferwicklung
13     Stützstruktur

**Patentansprüche**

1.  Hochtemperatur-Supraleiterlager,
    **dadurch gekennzeichnet,**
    **dass** das Lager mit einem elektrodynamischen Dämpfer ausgestattet ist, der ein permanentmagnetisches Erregersystem (2, 3; 9) und eine elektrisch leitfähige Schicht (8) aufweist, wobei das Erregersystem (2, 3; 9) ein Gradientenfeld erzeugt, das mit der elektrisch leitfähigen Schicht (8) wechselwirkt.

2.  Hochtemperatur-Supraleiterlager nach Anspruch 1,
    **dadurch gekennzeichnet,**
    **dass** die Permanentmagnete (2, 9a) zwischen ferromagnetischen Flussleitstücken (3, 9b) angeordnet sind.

3.  Hochtemperatur-Supraleiterlager nach Anspruch 1 oder 2,
    **dadurch gekennzeichnet,**
    **dass** der elektrodynamische Dämpfer zwei oder mehr Erregersysteme (2, 3; 9) und zwei oder mehr elektrisch leitfähige Schichten (8) aufweist.

4.  Hochtemperatur-Supraleiterlager nach einem der vorhergehenden Ansprüche,
    **dadurch gekennzeichnet,**
    **dass** die Lageranordnung ausgewählt ist unter einer linearen, einer planar-zylindrischen und einer konzentrisch-zylindrischen Anordnung.

5.  Hochtemperatur-Supraleiterlager nach einem der vorhergehenden Ansprüche,
    **dadurch gekennzeichnet,**
    **dass** der Dämpfer außerhalb des Wirkbereichs des Magnetlagers angeordnet ist.

6.  Hochtemperatur-Supraleiterlager nach einem der Ansprüche 1 bis 5,
    **dadurch gekennzeichnet,**
    **dass** der Dämpfer im Wirkbereich des Magnetlagers mechanisch angeordnet ist.

7.  Hochtemperatur-Supraleiterlager nach einem der Ansprüche 1 bis 6,
    **dadurch gekennzeichnet,**
    **dass** das Errregersystem (2, 3) des Magnetlagers zwischen Hochtemperatursupraleiter (1) und elektrisch leitfähiger Schicht (8) angeordnet ist und gleichzeitig das Erregersystem für den Dämpfer bildet.

8.  Hochtemperatur-Supraleiterlager nach einem der Ansprüche 1 bis 4,
    **dadurch gekennzeichnet,**
    **dass** der Dämpfer in den Wirkbereich des Magnetlagers integriert ist, wobei das Erregersystem (2, 3) für das Magnetlager gleichzeitig das Erregersystem für den Dämpfer bildet und die elektrisch leitfähige Schicht (8) zwischen dem Erregersystem (2, 3) und dem Hochtemperatur-Supraleiter (1) angeordnet ist.

9.  Hochtemperatur-Supraleiterlager nach einem der vorhergehenden Ansprüche,
    **dadurch gekennzeichnet,**
    **dass** die elektrisch leitfähige Schicht (8) auf der Seite, die dem Erregersystem (2, 3; 9) zugewandt ist, im Bereich der Permanentmagnete (2, 9a) streifenförmige Verstärkungen (11) aufweist, die sich parallel zu den Permanentmagneten (2, 9a) erstrecken.

10. Hochtemperatursupraleiter nach Anspruch 9,
**dadurch gekennzeichnet,**
**dass** die Permanentmagnete (2, 9a) im Bereich der streifenförmigen Verstärkungen (11) zurückgesetzt angeordnet sind, wobei zwischen den jeweils benachbarten Flussleiterstücken (3, 9b) Vertiefungen entstehen, die den streifenförmigen Verstärkungen (11) gegenüberliegen.

11. Hochtemperatursupraleiter nach einem der vorhergehenden Ansprüche,
**dadurch gekennzeichnet,**
**dass** die elektrisch leitfähige Schicht (8) als Dämpferwicklung aus Streifen und gegebenenfalls Stegen aus elektrisch leitfähigen Material gebildet ist.

12. Hochtemperatur-Supraleiterlager nach Anspruch 11,
**dadurch gekennzeichnet,**
**dass** die als elektrisch leitfähige Schicht (8) dienende Dämpferwicklung (12) innerhalb von Vertiefungen des Erregersystems (2, 3; 9) angeordnet ist, wobei die Vertiefungen gebildet werden durch Zurücksetzen der Permanentmagnete (2, 9a), wodurch sich die Flussleiterstücke (3, 9b) über die Permanentmagnete (2, 9a) hinaus erstrecken.

13. Elektrodynamischer Dämpfer geeignet für Hochtemperatur-Supraleiterlager umfassend ein permanentmagnetisches Erregersystem (2, 3; 9), das ein Gradientenfeld erzeugt, und eine elektrisch leitfähige Schicht (8) als Dämpferreaktionsteil, wobei die elektrisch leitfähige Schicht (8) mit dem Gradientenfeld wechselwirkt.

14. Elektrodynamischer Dämpfer nach Anspruch 13,
**dadurch gekennzeichnet,**
**dass** der Dämpfer eine lineare, planar-zylindrische oder konzentrischzylindrische Anordnung aufweist.

15. Elektrodynamischer Dämpfer nach einem der Ansprüche 13 oder 14,
**dadurch gekennzeichnet,**
**dass** der Dämpfer in ein Lager mechanisch integrierbar ist.

16. Elektrodynamischer Dämpfer nach Anspruch 13 oder 14,
**dadurch gekennzeichnet,**
**dass** das Erregersystem (2, 3) eines Magnetlagers gleichzeitig das Erregersystem des Dämpfers bildet.

17. Elektrodynamischer Dämpfer nach einem der Ansprüche 13 bis 16,
**dadurch gekennzeichnet,**
**dass** die elektrisch leitfähige Schicht (8) auf der Seite, die dem Erregersystem (2, 3; 9) zugewandt ist, im Bereich der Permanentmagnete (2, 9a) streifenförmige Verstärkungen (11) aufweist, die sich parallel zu den Permanentmagneten (2, 9a) erstrecken.

18. Elektrodynamischer Dämpfer nach einem der Ansprüche 13 bis 16,
**dadurch gekennzeichnet,**
**dass** die elektrisch leitfähige Schicht (8) als Wicklung (12) aus Streifen und gegebenenfalls Stegen gebildet ist.

19. Elektrodynamischer Dämpfer nach einem der Ansprüche 13 bis 18,
**dadurch gekennzeichnet,**
**dass** auf der Seite des Erregersystems (2, 3; 9), die der elektrisch leitfähigen Schicht (8) oder Wicklung (12) zugewandt ist, die Permanentmagnete (2, 9a) zurückgesetzt angeordnet sind, so dass die ferromagnetischen Flussleitstücke (3, 9b) die Permanentmagnete (2, 9a) überragen und jeweils zwischen zwei benachbarten Flussleitstücken (3, 9b) Vertiefungen gebildet werden.

20. Elektrodynamischer Dämpfer nach Anspruch 19,
**dadurch gekennzeichnet,**
**dass** die Vertiefungen (11) der streifenförmigen Verstärkungen (11) der elektrisch leitfähigen Schicht (8) gegenüberliegen.

21. Elektrodynamischer Dämpfer nach Anspruch 19,
    **dadurch gekennzeichnet,**
    **dass** die Wicklung (12) innerhalb der Vertiefungen (11) angeordnet ist.

**Fig. 1**

**Fig. 2a**

**Fig. 2b**

**Fig. 3a**  **Fig. 3b**  **Fig. 3c**

**Fig. 4**

Aktivierungsposition

Arbeitsposition

Rotor

mg

HTSL

**Fig. 5**

HTSL

HTSL

Rotor

mg

HTSL

HTSL

Fig. 6a

Fig. 6b

Fig. 7a

**Fig. 7b**

**Fig. 8a**

Fig. 8b

Fig. 9a

**Fig. 9b**

**Fig. 10**

Richtungen der
Oszillation

8    11    9a    9b

**Fig. 11**

12

**Fig. 12**

12

**Fig. 13**

3

Richtungen der
Oszillation

8          11          2

**Fig. 14**

**Fig. 15**

**Fig. 16**

*HTSL*

1

2

3

12

Richtungen der
Oszillation

# Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1767798 A1
- WO 0206688 A1